# EUROPEAN PATENT SPECIFICATION

(11) **EP 2 090 446 B1**
(45) Date of publication and mention of the grant of the patent: **27.11.2013**
(21) Application number: 09152504.8
(22) Date of filing: 11.02.2009
(51) Int. Cl.: B60C 25/138

(54) **Bead releasing device**
Wulstabdrückvorrichtung
Appareil de briseur de talons

(30) Priority: 13.02.2008 IT VR20080018
(43) Date of publication of application: 19.08.2009
(73) Proprietor: Butler Engineering & Marketing S.p.A., 42047 Rolo, Reggio Emilia (IT)
(72) Inventor: Gonzaga, Tullio, 42015, Correggio - Reggio Emilia (IT); Santi, Silvano, 40026, Imola - Bologna (IT)
(74) Representative: Feltrinelli, Secondo Andrea

(56) References cited:
- EP-A- 0 499 825
- EP-A- 1 479 538
- EP-A- 1 584 495

## Description

The present invention relates to a resistant-load handling device having in particular one or more work arms and being particularly suitable for handling two arms designed to support a tire bead releasing, assembling or disassembling tools for vehicle tires.

Work arms, e. g. of tire assembling-disassembling machines or plate/plane support arms, such as raising machine arms (e. g. cranes) designed to displace loads between different levels, are suitably handled by means of an actuator comprising, for example, a fluid-operated group having its cylinder anchored to a base (e. g. a base of a crane) and a piston rod protruding from the cylinder, whose free end is designed to support a work arm.

First of all, with such a solution a jack or another linear actuator for each working arm should be used. Moreover, when very high levels are to be reached, or loads are to be moved between two quite distant levels, a jack suitable for carrying out a stroke of considerable length must be used, which involves high costs. However, if the jack does not work in a vertical trim, a bending moment approximately proportional to the length of the jack occurs at the free end of the stem. Thus, a substantial resistant force arises, that must be overcome to obtain a stable and safe operation of the load handling device.

So far as the specific field of the tire assembling-disassembling machines is concerned, as it is known, such machines usually comprise a base, a wheel support table mounted for rotation on the base, one or more columns rising from the base, and one or more work arms cantileverwise extending from the or each column, each work arm being designed to support a respective tool at the free end thereof. Such tools are the so-called "bead releasing tools", that are employed to bead release, i. e. to detach the beads of a tire mounted on a wheel rim from its respective wheel rim edge. One or more work arms, generally extendable-retractable arms, generally extend from the column or columns, and each supports a respective assembling-disassembling tool designed to assist in mounting/dismounting operations by forcing a tire bead engaged by the tool to follow a pre-determined path by causing the engaged edge of the tire to be deformed so as to force it to pass over the wheel rim edge facing it.

Each work arm is controlled by a respective linear actuator, usually a pneumatic jack.

During tire assembling-disassembling operations a plurality of tools, typically two tools, must be simultaneously operated sometimes, and this obviously results in the need of operating as many actuators as are bead releasing tools to be controlled.

To this end, some tire assembling-disassembling machines are provided with bead releasing tools designed to be simultaneously or separately operated on opposite sides of a tire, e. g. when bead releasing, assembling or disassembling operations are to be accomplished.

EP-0 499 825 discloses a tire assembling-disassembling machine comprising a base, a main column upwardly extending from the base, a guide column connected to the main column, and a pair of work arms overhangingly and slidably mounted onto the guide column. Moreover, the machine is provided with a linear actuator connected to and designed to displace both work arms along the guide column.

EP-1 584 495 teaches a tire assembling-disassembling machine including a base, an upright member raising from the base, an assembly fixed to the upright member and designed to support and control a pair of overhangingly extending and retracting arms. Each arms can be controlled by means of a respective pneumatic jack, so as to be moved close to, and away from one another.

EP-1 479 538 relates to a machine for mounting and dismounting a tire, provided with a base, one or more column raising from the base and a plurality of work arms overhangingly mounted onto a respective column. The machine further includes jacks designed to cause the displacement of the arms.

The main object of the present invention is to provide a device suitable for handling a load along a track by means of a pair of movable elements moving along the track and one linear actuator having a length shorter than the load handling displacement.

Another object of the present invention is to provide a tire assembling-disassembling machine provided with a handling device designed to handle a pair of work arms, which can be operated by means of one linear actuator.

Another object of the present invention is to provide a tire assembling-disassembling machine provided with a handling device suitable for reducing the manufacturing and maintenance costs of the machine with respect to prior art machines.

According to a first aspect of the present invention there is provided a resistant load handling device comprising:
- a guide track or a plurality of parallel guide tracks;
- a pair of slides or carriages slidingly mounted along a guide track or a respective guide track;
- a linear actuator means associated with each slide or carriage and having at least one first component and at least one second component which can be displaced, upon control, one with respect to the other parallely to the guide track or plurality of parallel guide tracks, the at least one first component being movable together with a slide or carriage of the pair, and the at least one second component being movable together with the other slide or carriage of the pair;
- engagement means for a load displaceable together with the linear actuator means;
- first removable locking means associated with a slide or carriage of said pair and second removable locking means associated with the other slide or carriage of said pair, said first and second removable locking means being designed to keep in position its respective slide or carriage along the respective guide track; and
- control means designed to control the removable locking means and the linear actuator means.

According to another aspect of the present invention there is provided a tire assembling-disassembling machine which comprises a handling device in accordance with the present invention.

According to a further aspect of the present invention there is provided a method of handling a load, which comprises the following working step sequence:
- unlocking a locking means of one or first slide or carriage of a pair, while the other or second slide or carriage of the pair is kept locked,
- energizing the linear actuator means of the slide or carriage pair to cause a slide or carriage to be displaced along the track,
- locking the actuator means and simultaneously energizing a locking means for the displaced slide or carriage,
- unlocking the locking means of the second slide or carriage of the pair while the locking means of the first slide is kept locked,
- re-energizing the actuator means of the slide or carriage pair to cause the slide or carriage to be displaced along the track in the same direction as the first slide or carriage; and
- stopping the actuator means and simultaneously actuating the locking means of the displaced second slide or carriage.

Further aspects and advantages of the present invention will better appear from the following detailed description of preferred embodiments of a handling device as illustrated in the accompanying drawings, in which:
- Figure 1 is a diagrammatic side elevation view of a handling device for a pair of work arms in accordance with the prior art; and
- Figure 2 is a diagrammatic side elevation view of a handling device for a pair of work arms in accordance with the present invention.

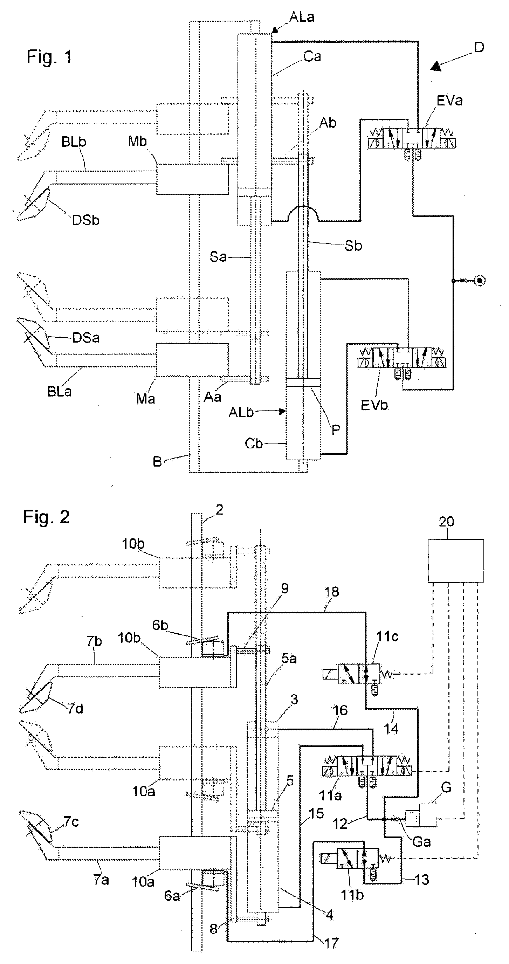

With reference first to Figure 1, a device D for handling a pair of work arms BLa, BLb according to the prior art has been schematically shown, which comprises a support structure B, two linear double-acting piston-cylinder actuators, e. g. two pneumatic jacks ALa, ALb, each jack comprising a cylinder Ca, Cb and a respective piston rod Sa, Sb which protrudes therefrom and is controlled by a piston P slidingly mounted into the cylinder. The cylinder of each actuator is secured, e. g. welded, to the support structure B. The two actuators are arranged parallel but opposite to one another, i. e. the actuator ALa has its piston rod Sa extending in one direction and that of the actuator ALb in the opposite direction.

Each piston rod Sa, Sb is fixed at its free end, e. g. by means of a respective support rod Aa, Ab, to a sleeve Ma, Mb, respectively, slidingly mounted on a guide track PS extending parallel to the actuators ALa and ALb and supporting a respective cantileverwise-extending work arm BLa, BLb, which supports at its free end a tool, e. g. a bead releasing disc DSa, DSb, respectively.

The handling device D further comprises a compressed air source in fluid communication with two electro-valves EVa, EVb, each of which is, in turn, in fluid communication with the two ends of a respective cylinder Ca, Cb.

With this arrangement, upon feeding compressed air to the device D and suitably switching the electro-valves EVa, EVb, compressed air can be supplied to one side or the other of the jacks to control the extension/retraction of each piston rod Sa, Sb, i. e. the moving away-approaching displacement of the work arms BLa and BLb.

A handling device of this type thus requires so many linear actuators as work arms to be displaced, and this obviously involves high manufacturing and maintenance costs for a tire assembling-disassembling machine.

Figure 2 shows a device 1 for handling two work arms 7a, 7b according to the present invention.

Such a device comprises:
- a column or upright 2 which is a slide guide track;
- a pair of slides or carriages 10a, 10b slidingly mounted on the guide track 2;
- a linear actuator means which extends substantially parallel to the column or upright 2 and comprises at least one first component and at least one second component; the linear actuator for example comprises a pneumatic cylinder-piston group or double acting jack 3 of any suitable type including a cylinder 4, a piston 5 slidingly mounted in the cylinder and a piston rod 5a rigid with the piston 5;
- removable locking means, e. g. comprising two stop clamping elements 6a, 6b of any suitable type, typically of a pneumatically controlled type, the clamping elements being removably engageable with the column or upright 2 and supported by a respective slide or carriage 10a, 10b;
- control means, e. g. comprising a control board 20, including a plurality of controls, such as a knob, a lever, a joy-stick and the like, and designed to control the stop clamping elements 6a and 6b and the double acting jack 3; and
- engagement means designed to engage a resistant load, and typically comprising a pair of work arms 7a, 7b, each rigid with a respective slide 10a and 10b, and thus with the cylinder 4 and the piston rod 5a, respectively, as further explained below.

The arms 7a, 7b extend in the same direction with respect to the column or upright.

More particularly, the clamping element 6a is fixed to the slide 10a, which, in turn, is secured to, and supports, e. g. through a bracket 8, the cylinder 4, whereas the clamping element 6b is fixed to the slide 10b, which, in turn, is secured to the piston rod 5 by means of a bracket 9.

The work arms 7a and 7b can be of any suitable type, e. g. comprising telescopic arms and supporting a frusto-conical bead releasing tool 7c and 7c, respectively, at the free end thereof, or at least one of them can comprise a hoisting platform, should the handling device be designed to raise-lower a load.

The linear actuator 3 may be of any suitable type, e. g. a fluid-operated jack, such as that shown in the drawings, or a rack (first component) and pinion (second component) type, the pinion being controllable by a reversible motor.

If a linear actuator of the fluid-operated jack type is adopted, the handling device also includes a pressurized fluid, e. g. compressed air, source or generator G, preferably provided with an outlet check valve Ga, and three valve groups, preferably three electro-valves, i. e.:
- a first three-way electro-valve 11 a, in fluid communication with the outlet of the check valve Ga of the generator G through a duct 12 and designed to supply pressurized fluid either to one end, e. g. by means of a duct 15, or to the other, e. g. by means of a duct 16, of the double acting jack 4,
- a second electro-valve 11a, preferably a two-way electro-valve, also in fluid communication through a duct 13 with the outlet of the check valve Ga of the generator G and designed to pneumatically control through a duct 17 the clamping element 6a associated with the slide or carriage 10a; and
- a third electro-valve 11c, preferably a two-way electro-valve, which is also in fluid communication through a duct 14 with the outlet of the check valve Ga of the generator G, and designed to pneumatically control, through a duct 18, the clamping element 6b associated with the slide or carriage 10b.

The electro-valves 11a, 11 b and 11 b can be controlled from the control board 20 to which it is electrically connected, the control board preferably comprising a suitable on-off control (not-shown) for energizing-stopping the generator G, as schematically shown in the drawing. The control board can also comprise a control signal transmission unit, e. g. radio, infrared or the like signals.

A handling device according to the embodiment shown on Figure 2, is suitable for causing the arms 7a, 7b to be displaced, either moved together, or away from one another, and particularly one of the arms 7a, 7b to be raised or lowered, while keeping the other standstill when the column or upright 2 is held in a substantially vertical trim. In order to raise the upper arm 7b, while keeping the arm 7a standstill:
- generator G is possibly energized (unless a compressed air storing tank is available),
- locking of the clamping element 6a through the electro-valve 11 b and unlocking of the clamping element 6b through the electro-valve 11c is controlled from the control board 20,
- the electro-valve 11a is then controlled, thereby feeding the lower end of jack 3 with compressed air through the electro-valve outlet in fluid communication with the duct 15, whereas the electro-valve outlet in fluid communication with the duct 16 makes it possible to discharge air from the upper end of the jack 5.

At this point, the piston 5 and thus the arm 7b starts raising up to a maximum level in relation to the stroke of the piston 5, at which level the electro-valve 11a is closed, thus stopping the jack 5. For further raising the arm 7b beyond the level thus reached, it is first necessary to lock the clamping element 6b through the electro-valve 11c, and unlock the clamping element 6a through the electro-valve 11 b, and then the electro-valve 11a is switched so that compressed air from the source G is fed to its outlet in fluid communication with the duct 16, and through its outlet in fluid communication with the duct 15 air is discharged from the lower end of jack 5.

Since the piston is fixed with respect to the column or upright 2, it will be the cylinder 4 that is caused to raise up to the maximum stroke of the piston 5, after which the electro-valve 11a will prevent the cylinder from further raising. The sequence may be repeated throughout the height of the column or upright 2.

If an inverse sequence is followed, the arm 7b or both arms 7a and 7b are caused alternatively to lower stepwise, or the arm 7a is caused to raise.

In order to move together or away from one another the arms 7a and 7b, one of them is locked by means of its clamping element, while the other is displaced.

A handling device according to the present invention makes it possible to control the movements of at least one or preferably two work arms by means of one linear actuator only, this resulting in advantages from the manufacturing and maintenance view points in a machine provided with the above-described handling device.

Should a handling device in accordance with the present invention be used in a tire assembling-disassembling machine, it will be understood that the guide track 2 is substantially parallel to the axis of rotation of the tyred-wheel or wheel rim support table to make it possible for the arms 7a and 7b to act as bead releasing arms controlled by one pneumatic jack.

As it will be apparent to a person skilled in the art, a handling device in accordance with the present invention may be used as a load raising-lowering device.

With a handling device in accordance with the present invention it is not necessary to use a long-stroke jack, and thus the tip of the piston rod, particularly when it is in a full extension condition, does not undergo severe bending moments, and even very substantial raising heights can be reached by repeating the above mentioned stepwise raising steps.

The above-described device is susceptible to numerous modifications and variations within the scope as defined by the claims.

Thus, for example the piston-cylinder group may comprise a double acting jack or a spring loaded single acting jack and the like.

The handling device may comprise a plurality of guide racks 2, on each of which a pair of slide or carriage elements provided with a respective removable stopping element, e. g. a clamping element is slidingly mounted.

## Claims

1. A handling device for a resistant load comprising:
- a guide track (2) or a plurality of parallel guide tracks;
- a pair of slides or carriages (10a, 10b) slidingly mounted on a guide track (2) or a respective guide track;
- one linear actuator (3) associated with both slides or carriages (10a, 10b) and having at least one first component (4) and at least one second component (5a) which can be displaced, upon control, one with respect to the other parallely to said guide track (2) or plurality of parallel guide tracks, said at least one first component (4) being displaceable together with a slide or carriage (10a) of said pair, and said at least one second component (5a) being displaceable together with the other slide or carriage (10b) of the pair;
- engagement means (7a, 7b) for a load displaceable together with said one linear actuator;
**characterized in that** it comprises:
- first removable locking means (6a) associated with a slide or carriage (10a) of said pair and second removable locking means (6b) associated with the other slide or carriage (10b) of said pair, said first and second removable locking means (6a, 6b) being designed to keep in position its respective slide or carriage along the respective guide track (2); and
- control means designed to control said removable locking means (6a, 6b) and said one linear actuator (3).

2. A handling device as claimed in claim 1, **characterized in that** said removable locking means comprises a clamping element (6a, 6b).

3. A handling device as claimed in claim 1 or 2, **characterized in that** said one linear actuator comprises at least one double-acting fluid-operated piston-cylinder group and at least one pressurized fluid source (G) controllable by said control means.

4. A handling device as claimed in claim 3, **characterized in that** said control means comprises:
- a first three-way valve group (11 a) in fluid communication with said at least one pressurized fluid source (G) and designed to supply, upon control, pressurized fluid either to one or the other end of said at least one double acting fluid-operated group (3),
- a second valve group (11 b) in fluid communication with said pressurized fluid source (G) and designed to control respective locking means (6a) associated with a slide or carriage (10a) of said pair;
- a third valve group (11c) in fluid communication with said pressurized fluid source (G) and designed to control respective locking means (6b) associated with the other slide or carriage (10b) of said pair; and
- a control unit (20) designed to control at least said first, second and third valve groups (11 a, 11 b and 11 c).

5. A handling device as claimed in claim 4, **characterized in that** said control unit (20) is electrically connected to said first, second and third valve groups (11 a, 11 b and 11 c).

6. A handling device as claimed in claim 5, **characterized in that** said control unit is electrically connected to, and designed to control said pressurized fluid source (G).

7. A handling device as claimed in claim 4, **characterized in that** said control unit (20) is designed to remotely control said first, second and third valve groups (11 a, 11 b and 11 c).

8. A handling device as claimed in claim 4, **characterized in that** said control unit (20) is designed to remotely control said pressurized fluid source (G).

9. A handling device as claimed in claim 1 or 2, **characterized in that** said one linear actuator comprises a rack and pinion group, the pinion or the rack being controllable by a reversible motor.

10. A handling device as claimed in any previous claim, **characterized in that** said engagement means comprises at least one cantilever work arm (7a, 7b) displaceable together with a respective slide or carriage (10a, 10b).

11. An assembling-disassembling machine, **characterized in that** it comprises a handling device as claimed in any previous claim.

12. A machine as claimed in claim 11, **characterized in that** said guide track (2) comprises a column or upright member and said pair of slides or carriages comprises a respective cantilever arm designed to support a respective work tool (7d, 7e), said cantilever arms protruding from the same side of said column or upright unit.

13. A load handling method by means of a device as claimed in any claim 1 to 10, **characterized in that** it comprises the following operating sequence:
- unlocking a locking means (6a) of one or first slide or carriage (10a) of a pair, while the other or second slide or carriage (10b) of the pair is kept locked,
- energizing a linear actuator (3) of the slide or carriage pair to cause a slide or carriage (10b) to be displaced along said track (2),
- locking said linear actuator (3) and simultaneously energizing a locking means (6a) for the displaced slide or carriage (10a),
- unlocking the locking means (6b) of the second slide or carriage (10b) of the pair while the locking means (6a) of the first slide is kept locked,
- re-energizing the linear actuator (3) of the slide or carriage pair to cause the slide or carriage (10b) to be displaced along said track (2) in the same direction as the first slide or carriage (10a); and
- stopping said linear actuator (3) and simultaneously actuating the locking means (6b) of the displaced second slide or carriage (10b).

## Patentansprüche

1. Handhabungsvorrichtung für eine Widerstandslast, die aufweist:
eine Führungsbahn (2) oder mehrere parallele Führungsbahnen;
ein Paar Schlitten oder Wagen (10a, 10b), die auf einer Führungsbahn (2) oder einer jeweiligen Führungsbahn gleitend angeordnet sind;
ein Linearantrieb (3) in Zuordnung zu beiden Schlitten oder Wagen (10a, 10b) und mit mindestens einer ersten Komponente (4) und mindestens einer zweiten Komponente (5a), die bei Steuerung verschoben werden können, eine im Hinblick auf die andere parallel zur Führungsbahn (2) oder mehreren parallelen Führungsbahnen, wobei die mindestens eine erste Komponente (4) zusammen mit einem Schlitten oder Wagen (10a) des Paars verschiebbar ist und die mindestens eine zweite Komponente (5a) zusammen mit dem anderen Schlitten oder Wagen (10b) des Paars verschiebbar ist;
eine Eingriffseinrichtung (7a, 7b) für eine Last, die zusammen mit dem einen Linearantrieb verschiebbar ist;
**dadurch gekennzeichnet, dass** sie aufweist:
eine erste entfernbare Sperreinrichtung (6a) in Zuordnung zu einem Schlitten oder Wagen (10a) des Paars und eine zweite entfernbare Sperreinrichtung (6b) in Zuordnung zu dem anderen Schlitten oder Wagen (10b) des Paars, wobei die erste und zweite entfernbare Sperreinrichtung (6a, 6b) so gestaltet sind, dass sie ihren jeweiligen Schlitten oder Wagen an der jeweiligen Führungsbahn (2) entlang in Position halten; und
eine Steuereinrichtung, die so gestaltet ist, dass sie die entfernbaren Sperreinrichtungen (6a, 6b) und den einen Linearantrieb (3) steuert.

2. Handhabungsvorrichtung nach Anspruch 1, **dadurch gekennzeichnet, dass** die entfernbare Sperreinrichtung ein Klemm- bzw. Spannelement (6a, 6b) aufweist.

3. Handhabungsvorrichtung nach Anspruch 1 oder 2, **dadurch gekennzeichnet, dass** der eine Linearantrieb mindestens eine doppelt wirkende fluidbetätigte Kolben-Zylinder-Gruppe und mindestens eine Druckfluidquelle (G) aufweist, die durch die Steuereinrichtung steuerbar sind.

4. Handhabungsvorrichtung nach Anspruch 3, **dadurch gekennzeichnet, dass** die Steuereinrichtung aufweist:
eine erste Dreiwegeventilgruppe (11a) in Fluidkommunikation mit der mindestens einen Druckfluidquelle (G) und so gestaltet, dass sie bei Steuerung Druckfluid entweder zu einem oder zum anderen Ende der mindestens einen doppelt wirkenden fluidbetätigten Gruppe (3) führt, eine zweite Ventilgruppe (11b) in Fluidkommunikation mit der Druckfluidquelle (G) und so gestaltet, dass sie eine jeweilige Sperreinrichtung (6a) in Zuordnung zu einem Schlitten oder Wagen (10a) des Paars steuert;
eine dritte Ventilgruppe (11c) in Fluidkommunikation mit der Druckfluidquelle (G) und so gestaltet, dass sie eine jeweilige Sperreinrichtung (6b) in Zuordnung zum anderen Schlitten oder Wagen (10b) des Paars steuert; und
eine Steuereinheit (20), die so gestaltet ist, dass sie mindestens die erste, zweite und dritte Ventilgruppe (11a, 11b und 11c) steuert.

5. Handhabungsvorrichtung nach Anspruch 4, **dadurch gekennzeichnet, dass** die Steuereinheit (20) mit der ersten, zweiten und dritten Ventilgruppe (11a, 11b und 11c) elektrisch verbunden ist.

6. Handhabungsvorrichtung nach Anspruch 5, **dadurch gekennzeichnet, dass** die Steuereinheit mit der Druckfluidquelle (G) elektrisch verbunden und so gestaltet ist, dass sie diese steuert.

7. Handhabungsvorrichtung nach Anspruch 4, **dadurch gekennzeichnet, dass** die Steuereinheit (20) so gestaltet ist, dass sie die erste, zweite und dritte Ventilgruppe (11a, 11b und 11c) fernsteuert.

8. Handhabungsvorrichtung nach Anspruch 4, **dadurch gekennzeichnet, dass** die Steuereinheit (20) so gestaltet ist, dass sie die Druckfluidquelle (G) fernsteuert.

9. Handhabungsvorrichtung nach Anspruch 1 oder 2, **dadurch gekennzeichnet, dass** der eine Linearantrieb eine Zahnstangengruppe aufweist, wobei das Zahnrad oder die Zahnstange durch einen Umkehrmotor steuerbar ist.

10. Handhabungsvorrichtung nach einem der vorstehenden Ansprüche, **dadurch gekennzeichnet, dass** die Eingriffseinrichtung mindestens einen Kragarbeitsarm (7a, 7b) aufweist, der zusammen mit einem jeweiligen Schlitten oder Wagen (10a, 10b) verschiebbar ist.

11. Montage-Demontage-Maschine, **dadurch gekennzeichnet, dass** sie eine Handhabungsvorrichtung nach einem der vorstehenden Ansprüche aufweist.

12. Maschine nach Anspruch 11, **dadurch gekennzeichnet, dass** die Führungsbahn (2) eine Säule oder ein aufrechtstehendes Element aufweist und das Paar Schlitten oder Wagen einen jeweiligen Kragarm aufweist, der so gestaltet ist, dass er ein jeweiliges Arbeitswerkzeug (7d, 7e) trägt, wobei die Kragarme von derselben Seite der Säule oder aufrechtstehenden Einheit vorstehen.

13. Lasthandhabungsverfahren mit Hilfe einer Vorrichtung nach einem der Ansprüche 1 bis 10, **dadurch gekennzeichnet, dass** es den folgenden Betriebsablauf aufweist:
Entsperren einer Sperreinrichtung (6a) eines oder eines ersten Schlittens oder Wagens (10a) eines Paars, während der andere oder zweite Schlitten oder Wagen (10b) des Paars gesperrt bleibt,
Aktivieren eines Linearantriebs (3) des Schlitten- oder Wagenpaars, um zu bewirken, dass ein Schlitten oder Wagen (10b) an der Bahn (2) entlang verschoben wird,
Sperren des Linearantriebs (3) und gleichzeitiges Aktivieren einer Sperreinrichtung (6a) für den verschobenen Schlitten oder Wagen (10a),
Entsperren der Sperreinrichtung (6b) des zweiten Schlittens oder Wagens (10b) des Paars, während die Sperreinrichtung (6a) des ersten Schlittens gesperrt bleibt,
erneutes Aktivieren des Linearantriebs (3) des Schlitten- oder Wagenpaars, um zu bewirken, dass der Schlitten oder Wagen (10b) an der Bahn (2) entlang in gleicher Richtung wie der erste Schlitten oder Wagen (10a) verschoben wird; und
Stoppen des Linearantriebs (3) und gleichzeitiges Betätigen der Sperreinrichtung (6b) des verschobenen zweiten Schlittens oder Wagens (10b).

## Revendications

1. Dispositif de manutention pour une charge résistante, comprenant:
une piste de guidage (2) ou une pluralité de pistes de guidage parallèles;
une paire de glissières ou de chariots (10a, 10b) montée de manière coulissante sur une piste de guidage (2) ou une piste de guidage respective;
un actionneur linéaire (3) associé aux deux glissières ou chariots (10a, 10b) et ayant au moins un premier composant (4) et au moins un second composant (5a) qui peuvent être déplacés, sur commande, l'un par rapport à l'autre, parallèlement à ladite piste de guidage (2) ou à une pluralité de pistes de guidage parallèles, ledit au moins un premier composant (4) pouvant se déplacer conjointement avec une glissière ou un chariot (10a) de ladite paire, et ledit au moins un second composant (5a) pouvant se déplacer conjointement avec l'autre glissière ou chariot (10b) de la paire;
des moyens de mise en prise (7a, 7b) pour une charge, pouvant être déplacés conjointement avec ledit actionneur linéaire;
**caractérisé en ce qu'**il comprend:
des premiers moyens de blocage amovibles (6a) associés avec une glissière ou un chariot (10a) de ladite paire et des seconds moyens de blocage amovibles (6b) associés avec l'autre glissière ou chariot (10b) de ladite paire, lesdits premiers et seconds moyens de blocage amovibles (6a, 6b) étant conçus pour maintenir en position leur glissière respective ou chariot respectif le long de la piste de guidage (2) respective; et
des moyens de commande conçus pour commander lesdits moyens de blocage amovibles (6a, 6b) et ledit un actionneur linéaire (3).

2. Dispositif de manutention selon la revendication 1, **caractérisé en ce que** lesdits moyens de blocage amovibles comprennent un élément de serrage (6a, 6b).

3. Dispositif de manutention selon la revendication 1 ou 2, **caractérisé en ce que** ledit un actionneur linéaire comprend au moins un groupe de piston - cylindre hydraulique à double effet et au moins une source de fluide sous pression (G) pouvant être commandée par lesdits moyens de commande.

4. Dispositif de manutention selon la revendication 3, **caractérisé en ce que** lesdits moyens de commande comprennent:
un premier groupe de valve à trois voies (11a) en communication de fluide avec ladite au moins une source de fluide sous pression (G) et conçu pour fournir, sur commande, du fluide sous pression à l'une ou l'autre extrémité dudit au moins un groupe hydraulique à double effet (3),
un deuxième groupe de valve (11b) en communication de fluide avec ladite source de fluide sous pression (G) et conçu pour commander des moyens de blocage (6a) respectifs associés avec une glissière ou un chariot (10a) de ladite paire;
un troisième groupe de valve (11c) en communication de fluide avec ladite source de fluide sous pression (G) et conçu pour commander des moyens de blocage (6b) respectifs associés à l'autre glissière ou chariot (10b) de ladite paire; et
une unité de commande (20) conçue pour commander au moins lesdits premier, deuxième et troisième groupes de valve (11a, 11b et 11c).

5. Dispositif de manutention selon la revendication 4, **caractérisé en ce que** ladite unité de commande (20) est raccordée électriquement auxdits premier, deuxième et troisième groupes de valve (11a, 11b et 11c).

6. Dispositif de manutention selon la revendication 5, **caractérisé en ce que** ladite unité de commande est raccordée électriquement à et conçue pour commander ladite source de fluide sous pression (G).

7. Dispositif de manutention selon la revendication 4, **caractérisé en ce que** ladite unité de commande (20) est conçue pour commander à distance lesdits premier, deuxième et troisième groupes de valve (11a, 11b et 11c).

8. Dispositif de manutention selon la revendication 4, **caractérisé en ce que** ladite unité de commande (20) est conçue pour commander à distance ladite source de fluide sous pression (G).

9. Dispositif de manutention selon la revendication 1 ou 2, **caractérisé en ce que** ledit un actionneur linéaire comprend un groupe de pignon et crémaillère, le pignon ou la crémaillère pouvant être commandé(e) par un moteur réversible.

10. Dispositif de manutention selon l'une quelconque des revendications précédentes, **caractérisé en ce que** lesdits moyens de mise en prise comprennent un bras de travail en porte-à-faux (7a, 7b) pouvant être déplacé conjointement avec une glissière respective ou chariot respectif (10a, 10b).

11. Machine de montage - démontage, **caractérisée en ce qu'**elle comprend un dispositif de manutention selon l'une quelconque des revendications précédentes.

12. Machine selon la revendication 11, **caractérisée en ce que** ladite piste de guidage (2) comprend un élément à colonne ou montant et ladite paire de glissières ou de chariots comprend un bras en porte-à-faux respectif conçu pour supporter un outil de travail (7d, 7e) respectif, lesdits bras en porte-à-faux faisant saillie du même côté de ladite unité à colonne ou montante.

13. Procédé de manutention de charge au moyen d'un dispositif selon l'une quelconque des revendications 1 à 10, **caractérisé en ce qu'**il comprend la séquence suivante d'étapes consistant à:
débloquer un moyen de blocage (6a) d'une ou première glissière ou d'un ou premier chariot (10a) d'une paire, alors que l'autre ou seconde glissière ou l'autre ou second chariot (10b) de la paire est maintenu(e) bloqué(e),
alimenter un actionneur linéaire (3) de la paire de glissières ou de chariots pour amener une glissière ou un chariot (10b) à être déplacé(e) le long de ladite piste (2),
bloquer ledit actionneur linéaire (3) et alimenter simultanément un moyen de blocage (6a) pour la glissière ou le chariot (10a) déplacé(e),
débloquer le moyen de blocage (6b) de la seconde glissière ou second chariot (10b) de la paire alors que le moyen de blocage (6a) de la première glissière est maintenu bloqué,
réalimenter l'actionneur linéaire (3) de la paire de glissières ou de chariots pour amener la glissière ou le chariot (10b) à être déplacé(e) le long de ladite piste (2) dans la même direction que la première glissière ou le premier chariot (10a); et
arrêter ledit actionneur linéaire (3) et actionner simultanément le moyen de blocage (6b) de la seconde glissière ou du second chariot déplacé(e) (10b).
